# EUROPEAN PATENT APPLICATION

(11) **EP 3 089 510 A1**
(43) Date of publication of application: **02.11.2016**
(21) Application number: 13900101.0
(22) Date of filing: 27.12.2013
(51) Int. Cl.: H04W 28/08

(54) **METHOD AND SYSTEM FOR AUTOMATICALLY DISCHARGING TRAFFIC IN A WIRELESS TELECOMMUNICATIONS NETWORK WITH SON AND ANDSF CAPACITIES**

(71) Applicant: Telefonica S.A., 28013 Madrid (ES)
(72) Inventor: MATAS SANZ, Primitivo, E-28013 Madrid (ES); FLOREZ RODRIGUEZ, David, E-28013 Madrid (ES)
(74) Representative: Herrero & Asociados, S.L.
(86) International application number: PCT/ES2013/070932
(87) International publication number: WO 2015/097319

(57) **Abstract**

Present invention refers to a method and a system for an automatic traffic offloading in a wireless telecommunication network with both Self Organization Network (SON) and Access Network Discovery and Selection Function (ANDSF) capabilities. According to various embodiments of the invention, a user equipment collects some status information and send said information to a node of the network, where an optimization algorithm is applied and a decision for an offloading through a Wi-Fi access point in range of the UE is taken.

## Description

### TECHNICAL FIELD OF THE INVENTION

Present invention generally relates to the optimization of wireless telecommunication networks and more specifically to automatically trigger a traffic offloading through Wi-Fi access points in wireless telecommunication networks with Self Organizing Network and Access Network Discovery and Selection Function capabilities.

### BACKGROUND OF THE INVENTION

Nowadays, massive use of mobile telecommunication networks has stimulated the design of an automation technology as Self-Organizing Network (SON) for planning, configuring, management, optimization and healing simpler and faster. 3rd Generation Partnership Project (3GPP) and Next Generation Mobile Network are in charge of defining and specifying the functionality and behaviour of mobile telecommunication networks with SON capability, which allows Network Operators to automate configuration processes in an optimized way without human intervention. SON functions intend to optimize aspects like Mobility Load Balancing (MLB), Mobility Robustness Optimization (MRO) and Random Access Channel (RACH) optimization. In a distributed SON architecture the functions are distributed throughout the elements at the network edge, typically the e-Nodes B. The information contained in the reports received from each User Equipment (UE) served by an evolved Node B (e-Node B) enable the e-Node B in charge of each mobile cell to run the self-optimization processes.

With the mobile traffic demands forecast to exceed network capacity, Network Operators are starting to deploy heterogeneous access networks that allow the mobile operator to offload traffic from the macro cellular scenario to cheaper shorter range Wi-Fi and Femto/Pico Access Point (APs). The connectivity and self-optimisation scenario in a distributed architecture is therefore becoming more and more complex.

In dual radio scenarios, such as Wi-Fi and cellular, the two access networks are not "aware" of each other. So, when an e-Node B collects data from a UE, the self-optimisation procedure cannot use data about available Wi-Fi APs to offload traffic to them when mobility load balancing is necessary.

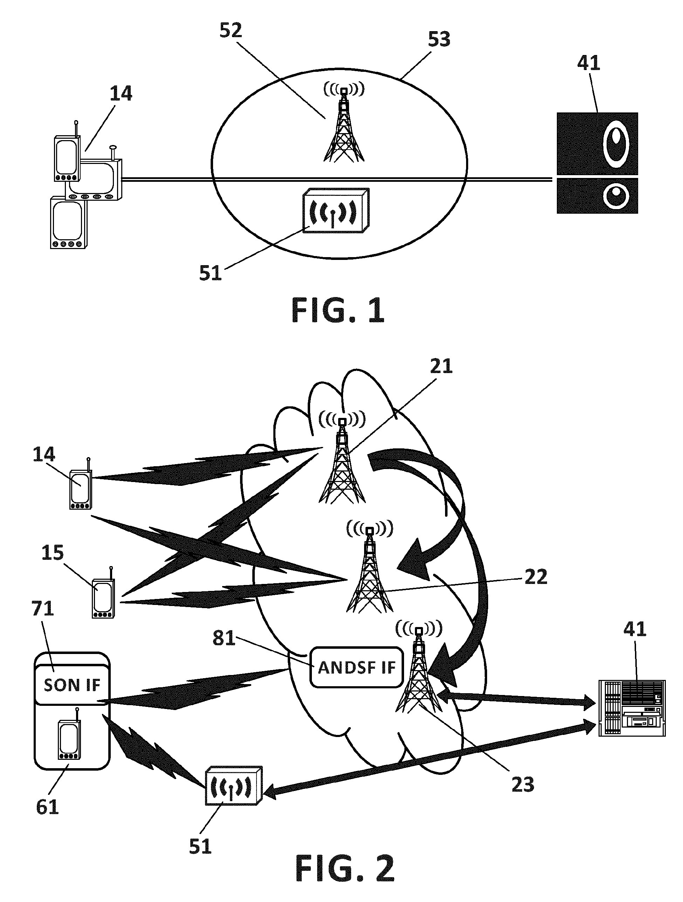

Access Network Discovery and Selection Function (ANDSF) is a network function intended to assist a UE in finding out which access networks (52), besides the 3GPP IP access (53), are allowed in a heterogeneous mobile network environment (54) by a Network Operator for traffic offloading. ANDSF is built around two basic entities, as shown in **Figure 1****,** one deployed in the Network Operator Core Network and usually referred as ANDSF server (41), where the policies regarding Wi-Fi access and offloading are stored, while the second one is an application installed in the UE (14) that retrieves the ANDSF policies and sends notifications to the ANDSF server concerning UE's location changes. Therefore, an ANDSF enabled UE receives data about Wi-Fi AP deployment in said heterogeneous mobile network environment (54) and is also capable to perform Wi-Fi offloading according to different conditions and priorities. Although the communication between the UE and the ANDSF server is mainly intended for the retrieval of offloading policies by the UE from the ANSDF server, the UE can also send its internal information, namely, geographical location, to the ANDSF server while requesting a policy pull in order to help the ANDSF server select the most suitable policy set. However, an e-Node B acting as SON node is not aware of this type of information and not even of the possibility of Wi-Fi offloading, so it cannot feed this data in its optimisation algorithms nor use the Wi-Fi offload support as a valid optimization action.

Prior art discloses some works based on ANDSF/SON standards as "ANDSF, Node Distributing Closed Subscriber Group (CSG) Information" US20120122422 where it is described a method for distributing CSG information comprising an allowed CSG List for a UE and cell information indicating position of a cell with controlled access associated to the Allowed CSG List; "ANDSF Provisioning" US 2013/0165,131, where it is described a provisioning UE in communication with an ANDSF server through an access network including a network interface unit of the Provisioning User Equipment (PUE) from which a registration request is sent to the ANDSF server through the access network and which receives a successful authentication result and a set of configuration instructions from the ANDSF server; "SON-based Interference Detection" US8,229,363 where it is presented a method of identifying and ranking interference sources, incorporated in the Interference Reduction feature, a fully automated, closed-loop SON solution; "Dynamic Load Balancing In An Extended Self Optimizing Network" US20110252477 where it is described a method for monitoring network traffic in a wireless network; or "Usage-based output power level adjustments for self-optimizing radio access" WO2010098970 where a wireless base station and method are described for adjusting an output power level for self-optimizing radio access node.
Different vendors have also released products related to the ANDSF standard and SON standard. They usually include enhancements to the plain standard in order to cover its main lacks. The most extended new feature is the inclusion of a policy manager engine to allow flexible prioritization beyond standard, or integrations with standard control elements in the Network Operator's side which as an additional feature includes specific triggers on the UE to initiate the discovery and selection function transparently, followed by an authentication and login process. Some integrated environments with other entities related to management and policies enforcement inside the operator network, as offered by main equipment manufacturers like Ericsson or Nokia, include Wi-Fi Gateways to manage Wi-Fi APs from inside the Core Operator Network and ANDSF server integrated into the network elements for access control (AAA server or HSS) and policy definition (PCRF). They are also developing SON functionalities, offering solutions inside the Operator Core Network and defining different algorithms to implement the main functionalities included in SON standard as proposed by 3GPP.

Although the ANDSF standard describes a mechanism for instructing UE about when, how and in which order, an UE can trigger an offload to an available and authorised network access (normally a Wi-Fi AP), it also displays several important drawbacks. The standard defines ANDSF servers as isolated elements, making it difficult for a network operator to apply specific policies per user or according to network conditions. Most vendor products and patents focus on addressing the lack of standard interfaces connecting the ANDSF server to management elements in the operator Core Network, like PCRFs or the HSS.

On the other hand, the SON standard defines a number of optimisation functionalities.

They enable the Network Operator to collect data from UEs and apply processing algorithms on these data sets to decide which optimisation actions are to be taken. Data sent by UE is usually related to macro cell radio link and can also include inter-RAT related information, but the solutions offered by manufacturers are generally focused on implementing the concepts outlined in the SON standard, mainly the implementation of its algorithms and how they can be refined, enhanced and complemented. However, non-3GPP radio accesses like Wi-Fi have not been contemplated either in the standard or vendor products. This restricts the usefulness of SON functionalities, like MLB, MRO and Energy Saving, since e-Nodes B do not include Wi-Fi APs in their optimisation algorithms/actions, even though they could help enhance, complement and refine them.

Therefore, prior art is clearly missing a solution to take advantage of the ANDSF information in SON networks as it would optimise important aspects in mobile network operation.

### SUMMARY OF THE INVENTION

Present invention solves the aforementioned problems by taking advantage of the information already stored in the ANDSF servers about available/reachable Wi-Fi APs according to UE's locations. Making this information aware to SON nodes allows triggering Wi-Fi offloads in an UE when needed, for example for optimizing MLB or saving energy. It is then presented a method for an automatic traffic offloading in a wireless telecommunication network with both Self Organization Network (SON) and Access Network Discovery and Selection Function (ANDSF) capabilities. The method comprises the steps of:
a) collecting both an ANDSF status and a Wi-Fi offloading status of a user equipment (UE);
b) sending the collected statuses from the UE to a node of the wireless telecommunication network;
c) applying, by the node, a SON optimization algorithm taking into account the collected statuses;
d) if a Wi-Fi offloading is required based on the SON optimization algorithm, updating an UE offloading policy from an ANDSF server;
e) checking whether the Wi-Fi offloading is allowed in the updated UE offloading policy;
f) if Wi-Fi offloading is allowed, automatically traffic offloading, by the UE, through a Wi-Fi access point in range.

Updating the UE offloading policy may comprise sending a message with a UE location, from the UE to the ANDSF server, and the policy server sending back to the UE the offloading policy according to the UE location.

When more than one Wi-Fi access points are in the range of the UE, present invention according to one embodiment, may further comprise the step of selecting one of the Wi-Fi access points to perform an offloading.

The status information of both ANDSF and Wi-Fi offloading may comprise, according to some embodiments of the invention, an ON state or an OFF state for each of them, indicating whether the ANDSF capability is allowed or not and whether Wi-Fi offloading is being carried out or not.
According to one embodiment, the wireless telecommunication network is a LTE network and the node is an e-Node B.

A second aspect of the invention refers to a system for an automatic traffic offloading in a wireless telecommunication network with both Self Organization Network (SON) and Access Network Discovery and Selection Function (ANDSF) capabilities. The system comprises:
- a user equipment (UE) configured for collecting ANDSF statuses and Wi-Fi offloading statuses; sending the collected statuses to a node of the wireless telecommunication network; checking offloading policies received from a ANDSF server; and automatically traffic offloading through a Wi-Fi access point in range;
- an ANDSF server configured for updating UE offloading policies;
- a node configured for applying a SON optimization algorithm taking into account the statuses collected by the UE and sending indications for updating UE offloading policies.

A last aspect of the invention refers to a non-transitory computer readable medium embodying computer program code thereon for execution by a computer processor, wherein said computer program code includes instructions for causing an automatic traffic offloading performing the method of the invention.

Present invention shifts the mediation functions to the UE, so they can be locally processed there (somehow "in the cloud") with only the information pertinent for each case, thus avoiding to overload the operator network. This solution offers a simple and straightforward way to include the new offloading possibility as Wi-Fi AP into the SON optimisation functionalities for the case of a mobile heterogeneous environment, thus expanding the number of transfer possibilities available to SON algorithms and subsequently improving the performance of SON functionalities: MLB, MRO and Energy saving.

With the solutions of the present invention, the SON optimisation functionality can tackle coverage holes in indoors environments, where radio penetration is usually impaired and but Wi-Fi resources are cheap and plenty, just by requesting UEs to perform a Wi-Fi offload. Thus, it is improved the Mobility Robustness Optimization (MRO), which intends to detect and prevent connection failures that can occur as a result of UE mobility related to problems in the handover between cell process (too early, too late, or over an inappropriate cell) or because of mobile coverage holes.

Another important advantage of present invention is that the SON optimisation function does not need be aware of the Wi-Fi AP in the cell is serving, but only if the UEs attached to the cell are ANDSF capable and can carry a Wi-Fi offload and requesting. Wi-Fi APs are thus included in a natural, distributed and straightforward way into SON enhanced e-Nodes B without requiring explicit reconfiguration each time a Wi-Fi AP is added or removed, since this information is already managed by the ANDSF systems.

Conversely, neither the ANDSF server nor the ANDSF protocol needs to be modified at all, since all the interworking between the ANDSF/SON worlds may be carried out at UE level, by the installation of an appropriate plugin in the UE and the activation of the ANDSF/SON capabilities. ANSDF/SON orchestration in the UEs themselves also avoids opening new network interfaces between the SON enhanced e-Nodes B and the ANDSF servers, preventing the signalling load from increasing within the operator network, with the risk of straining even further its scarce network resources.

In conclusion, present invention makes that, according to some embodiment, the set up and launching of a ANDSF enhanced SON architecture almost a matter of plug and play, once the respective plugins in the UEs and the e-Nodes B has been installed and activated. After that point, it requires almost no intervention/supervision, because the number of UEs and Wi-Fi APs recruited into the system will grow seamlessly and organically, as newANDSF/SON enhanced UEs are activated and new Wi-Fi APs are known to them.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1****.-** shows a basic ANDSF architecture from prior art.
**Figure 2****.-** shows a SON/ANDSF architecture according to one embodiment of the invention.
**Figure 3****.-** shows a command flow for the ANDSF/SON interworking according to one embodiment of the invention.
**Figure 4****.-** shows, according to one embodiment of the invention, an ADNSF/SON task flow.
**Figure 5****.-** illustrates a particular embodiment of the present invention where Mobility Load Balancing (MLB) is improved by ANDSF Wi-FI offloading.
**Figure 6****.-** illustrates a particular embodiment of the present invention where energy savings are improved by ANDSF Wi-Fi offloading.

### DETAILED DESCRIPTION OF THE INVENTION

The invention describes a process for joining the ANDSF and SON architectures (the latter in its distributed configuration) to create a single common cooperation environment, where the SON elements are aware of the existence of Wi-Fi APs, without requiring being explicitly configured with this information, can trigger an UE offload to Wi-Fi when necessary and can take into account UE's Wi-Fi offload statuses for SON optimisation calculations.

**Figure 2** shows a SON/ANDSF architecture according to one embodiment of the invention. The UEs (14,15) regularly send updates to the SON enhanced e-Nodes B (21,22,23) about their ANDSF capabilities and Wi-Fi offload status, so that SON enhanced e-Nodes B can use it to refine and complement their SON optimisation algorithms, instructing UEs to perform Wi-Fi offloads if needed.

Therefore, two different functional blocks of functions can be considered in figure 2:
- A plugin, SON IF (71) deployed in the ANDSF Client (61) of the UEs which enables the UE to monitoring and sending information about its ANDSF capabilities, for example an ON state or an OFF state, and Wi-Fi offloading status to SON enhanced e-Nodes B (21,22,23), as well as being able to request a refresh of the ANDSF policies from an ANDSF server (41) (for example by performing a policy pull from the ANDSF server) and/or a Wi-Fi offload to a Wi-Fi AP (51) in the UE's range, by relying on the already existing ANDSF client, and when instructed by the SON enhanced e-Node B serving its cell.
- A module ANDSF IF (81) deployed inside the SON enhanced e-Nodes B, which collects the information about ANDSF capabilities and Wi-Fi offload statuses sent by the SON IF module of the UEs in the cell is serving the e-Node B. Feeding these pieces of information in its SON optimisation algorithms, so Wi-Fi offload capabilities in the UEs can be taken into account, and finally instructing the UEs to carry out ANDSF policy updates and/or Wi-Fi offloads if needed.

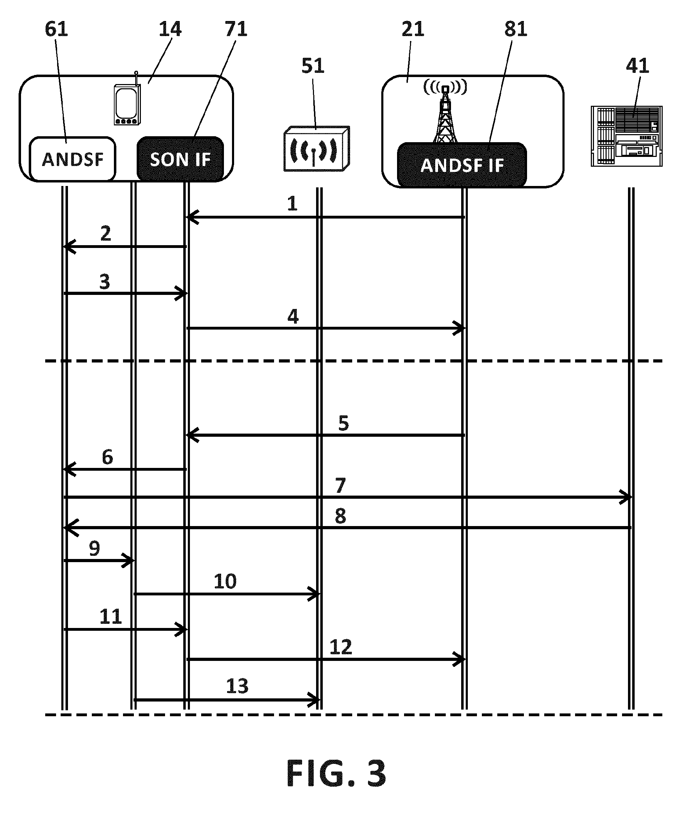

**Figure 3** represents a command flow for the ANDSF/SON interworking according to one embodiment of the invention, where periodically, the ANDSF IF module (81) deployed in the SON enhanced e-Node B (21) queries the UE, or more specifically the SON IF plugin (71) of the UE (14) in range for a report that collects the UE's current ANDSF status. After checking (2) and retrieving (3) this information from the ANDSF client (61), the SON IF plugin reports (4) the ANDSF status to the ADNSF IF, specifying at least the following two pieces of information:
- If the ANDSF support in the UE is on/off
- If the UE is currently offloading or not traffic to a Wi-Fi AP (51)

The SON optimization function in the e-Node B collects the information sent from all the UEs in range and thus assesses the overall status/health of the cell is serving. If a SON optimisation event is triggered after this analysis and it can be solved by launching a Wi-Fi offloading in a UE with ANDSF on (and not previously offloaded), the ANDSF IF instructs (5) the SON IF plugin in the selected UE(s) to update (6) its ANDSF policies and check if Wi-Fi offload is feasible. Where it is possible, the sequence of commands is, according to one embodiment of the invention, as follows:
- the UE requests (7) an ANDSF policy update from the ANDSF client in the UE;
- the ANDSF application in the UE requests (7) an ANDSF policy update from the ANDSF server (41) specifying UE's current location (Cell ID, geographical coordinates);
- the ANDSF server sends (8) back the updated policies according to the UE's location to the ANDSF Client;
- if Wi-Fi offload is allowed and available in the policies retrieved from the ANDSF server, the ANDSF client commands the UE to check (9)(10) if Wi-FI offload is feasible (for example checking whether the Wi-Fi AP (51) is in range);
- if Wi-Fi offload is feasible, the ANDSF application reports (11) this circumstance to the SON IF, which updates (12) the UE status ("offloaded") in the SON enhanced e-Node B, via its ANDSF IF;
- the UE offloads (13) its traffic to the selected Wi-FI AP;

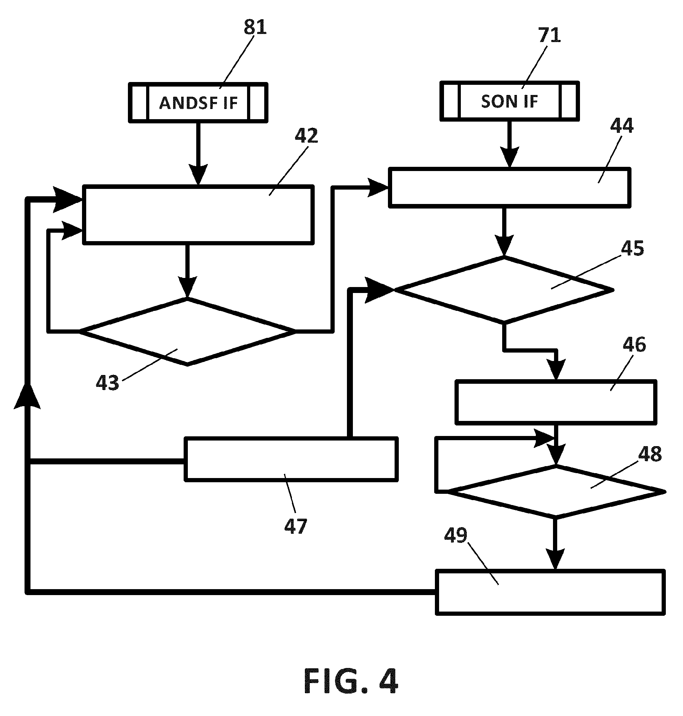

**Figure 4** depicts, according to one embodiment of the invention, an ADNSF/SON task flow illustrating the main actions carried out by the two modules of a UE: ANDSF IF (81) and the SON IF (71), as well as their relationships and sequence. The reports (42) from the UE are received by the ANDSF IF. In the case of requiring an offloading (43), the SON IF will update (44) the policies according to the UE location. Then, if the offloading is allowed (45), the status will change to a "to do" state (46), otherwise it will keep an "not possible" state (47). The SON IF checks (48) the offloading until the offloading is completed, when the offloading status will be "ready" (49). Thus, according to the status of the UEs in the cell served by the e-Node B and their accomplished Wi-Fi offloads the SON optimisation function can adapt to the UE environment, deciding to switch off cells, adjust power and so on.

As explained before, present invention offers a simple straightforward solution for including new offloading possibilities, like Wi-Fi APs, into a SON enhanced mobile heterogeneous environment, thus expanding and complementing the number of optimisation choices available to a e-Node B serving a cell.

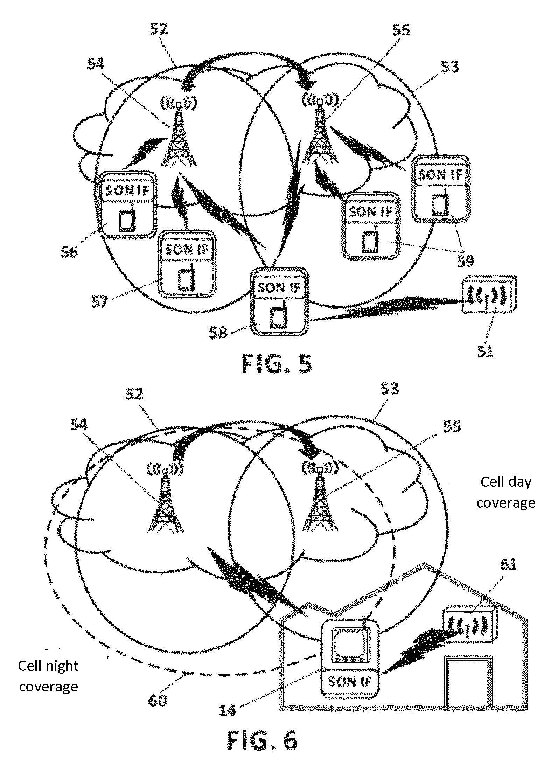

For illustrative purposes, a couple of particular embodiments focused on certain advantages are disclosed in detail in figure 5 (improving MLB) and figure 6 (Energy savings).

**Figure 5** illustrates a particular embodiment of the present invention where Mobility Load Balancing (MLB) is improved by ANDSF Wi-FI offloading. MLB is a functionality built into SON, which allows cells suffering from traffic congestion to transfer part of their load to other neighbouring cells, which have radio resources to spare. To perform this task, MLB requires neighbouring e-Nodes B to exchange information about load level and availability in the cells they are serving through the X2 interface, as well as information about the UEs attached to the involved e-Nodes B.

This particular embodiment of **Figure 5** represents two cells (52,53)(identified by their serving e-Node B A (54) and e-Node B B (55)) have been endowed with SON MLB capabilities and the SON/ANSDF interworking procedures of the present invention described before. At a precise moment, UE1 (56), UE2 (57) and UE3 (58) are attached to e-Node B A and both UE2 and UE3 start heavy downloads of data (for example video streaming or similar) that exhaust the radio resources at e-Node B A's disposal. The normal reaction of MLB would bet the transfer of UEs in the overlapping cell area from e-Node B A to e-Node B B in order to balance the load. However, if e-Node B is also heavily loaded by the UEs (59) served within his cell, the UE transfers will be rejected and both cells end up being congested and their attached UE experiencing QoS impairments.

If SON/ANDSF interworking capabilities are activated in UE2 and UE3, e-Node B A could fall back on ANDSF Wi-Fi offload to alleviate the congestion problems is experiencing. UE2 and UE3 will be then requested to perform a Wi-Fi offload, something that UE2 will disregard (no Wi-Fi AP in range) but UE3 would satisfy the request. Consequently, traffic overload in e-Node B A will be assuaged, without jeopardising QoS in e-Node B.
Therefore, it is achieved load balancing by seamlessly adding Wi-Fi APs located in the cell managed by a e-Node B as a valid offloading back-up choice to be activated in congestion situations.

**Figure 6** illustrates a particular embodiment of the present invention where energy savings are improved by ANDSF Wi-Fi offloading. SON energy saving functionalities are often optimized during night time switching off some of the cells, but this requires to increase the power other cells are emitting so total coverage is not jeopardised. This power increase is an expensive measure, whose cost could be cut back if UEs in the cell to be switched off could be previously detached and offloaded, to Wi-Fi AP for instance, making redundant the emission power increase in other cells. Given that during night time most of UEs remains static in residential areas with a home Wi-Fi AP in range, the SON/ANDSF integration described by present invention enables the emptying of cells, which can subsequently be switched off.

The example environment of Figure 7 represents how, during daytime, e-Node B A (54) and e-Node B B (55) have a normal coverage, highlighted with a solid outline (52, 53), but during night time the SON energy saving functionality will try switching off one of them (B in this case), so UEs in that cell will be requested to transfer to e-Node B A's cell. To avoid coverage hole, the usual procedure requires e-Node B A to re-configure its emission parameters in order to cover A+B cell areas, as is highlighted by dashed line (60), with the consequent increase in energy consumptions. But, in this case, present invention could help to maintain overall coverage without increasing energy consumptions by instructing the UEs located in the area covered by e-Node B B to perform a Wi-Fi offload. Since during night time, most of the UEs are normally static and close to their home Wi-Fi APs (61), most off will be successfully accomplished, and therefore, once the cell has been emptied, e-Node B B can be switched off without the e-Node B A being forced to increase its coverage area, or at least not to the full extent of the joint A and B areas.

Therefore, emission power levels can be dynamically adjusted by complementing SON with ANDSF Wi-Fi offload functions, and even greater energy savings achieved.

## Claims

1. A method for an automatic traffic offloading in a wireless telecommunication network with both Self Organization Network (SON) and Access Network Discovery and Selection Function (ANDSF) capabilities, the method is **characterized by** comprising the steps of:
g) collecting both an ANDSF status and a Wi-Fi offloading status of a user equipment (UE);
h) sending the collected statuses from the UE to a node of the wireless telecommunication network;
i) applying, by the node, a SON optimization algorithm taking into account the collected statuses;
j) if a Wi-Fi offloading is required based on the SON optimization algorithm, updating an UE offloading policy from an ANDSF server;
k) checking whether the Wi-Fi offloading is allowed in the updated UE offloading policy;
l) if Wi-Fi offloading is allowed, automatically traffic offloading, by the UE, through a Wi-Fi access point in range.

2. The method according to claim 1, wherein updating the UE offloading policy further comprising sending a message with a UE location, from the UE to the ANDSF server, and the policy server sending back to the UE the offloading policy according to the UE location.

3. The method according to claim 1, wherein more than one Wi-Fi access points are in the range of the UE, further comprising the step of selecting one of the Wi-Fi access points to perform an offloading.

4. The method according to claim 1 wherein each of the ANDSF status information and Wi-Fi offloading status comprising an ON state or an OFF state.

5. The method according to claim 1 wherein the wireless telecommunication network is a LTE network and the node is an e-Node B.

6. A system for an automatic traffic offloading in a wireless telecommunication network with both Self Organization Network (SON) and Access Network Discovery and Selection Function (ANDSF) capabilities, the system is **characterized by** comprising:
- a user equipment (UE) configured for collecting ANDSF statuses and Wi-Fi offloading statuses; sending the collected statuses to a node of the wireless telecommunication network; checking offloading policies received from a ANDSF server; and automatically traffic offloading through a Wi-Fi access point in range;
- an ANDSF server configured for updating UE offloading policies;
- a node configured for applying a SON optimization algorithm taking into account the statuses collected by the UE and sending indications for updating UE offloading policies.

7. The system of claim 6 wherein the wireless telecommunication network is a LTE network and the node is an e-node B.

8. A non-transitory computer readable medium embodying computer program code thereon for execution by a computer processor, wherein said computer program code includes instructions for causing an automatic traffic offloading performing the method according to claim 1.
